(19) Europäisches Patentamt
European Patent Office
Office européen des brevets

(11) **EP 3 554 321 B1**

(12) **EUROPÄISCHE PATENTSCHRIFT**

(45) Veröffentlichungstag und Bekanntmachung des Hinweises auf die Patenterteilung:
**13.03.2024   Patentblatt 2024/11**

(21) Anmeldenummer: **17816691.4**

(22) Anmeldetag: **11.12.2017**

(51) Internationale Patentklassifikation (IPC):
**A47J 36/24** *(2006.01)*

(52) Gemeinsame Patentklassifikation (CPC):
**A47J 36/2433; A47J 36/2438**

(86) Internationale Anmeldenummer:
**PCT/EP2017/082225**

(87) Internationale Veröffentlichungsnummer:
**WO 2018/108814 (21.06.2018 Gazette 2018/25)**

(54) **VORRICHTUNG ZUR TEMPERIERUNG VON BABYNAHRUNG**

DEVICE FOR CONTROLLING THE TEMPERATURE OF BABY FOOD

DISPOSITIF DESTINÉ À ATTIÉDIR L'ALIMENTATION POUR NOURRISSON

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.12.2016   EP 16204285**

(43) Veröffentlichungstag der Anmeldung:
**23.10.2019   Patentblatt 2019/43**

(73) Patentinhaber: **Medela Holding AG**
**6340 Baar (CH)**

(72) Erfinder:
• **FURRER, Etienne**
**6330 Cham (CH)**

• **FELBER, Armin**
**6003 Luzern (CH)**
• **MUTHER, Marcel**
**6030 Ebikon (CH)**

(74) Vertreter: **Grünecker Patent- und Rechtsanwälte PartG mbB**
**Leopoldstraße 4**
**80802 München (DE)**

(56) Entgegenhaltungen:
**WO-A1-2014/190475      WO-A1-2015/173042**
**US-A1- 2011 033 587      US-B1- 6 417 498**

**Beschreibung**

TECHNISCHES GEBIET

Die vorliegende Erfindung betrifft eine Vorrichtung und ein Verfahren zur Temperierung von Babynahrung.

STAND DER TECHNIK

Bei der Verabreichung von Säuglingsnahrung ist es wichtig, dass die Nahrung innerhalb eines relativ engen Temperaturbereichs liegt, damit sie für den Säugling gut verträglich ist. Dies betrifft insbesondere Flüssigkeiten wie abgepumpte Muttermilch, aus anderen Milchprodukten zusammengesetzte Milch oder Tee.
Es sind im Stand der Technik diverse Flaschenwärmer bekannt, welche ein Erwärmen von Babynahrung, insbesondere von Flüssigkeiten, auf eine vorbestimmte Temperatur ermöglichen.
US 2 756 031 A offenbart einen Flaschenwärmer mit einem Gefäss für die Babyflasche. Das Gefäss wird mit Wasser gefüllt, welches mittels einer im Gefäss angeordneten und die eingeführte Flasche umschliessenden Heizschlange erwärmt wird. US 2008/0199164 A1 zeigt einen etwas zeitgemässeren Flaschenwärmer mit einem flüssigkeitsgefüllten Gefäss zur Aufnahme der Flasche. Ein Sensor in der Wandung des Gefässes misst die Temperatur der Heizflüssigkeit.
Aus US 2009/0208193 A1 ist ein Flaschenwärmer bekannt, welcher die Flasche mit umströmender Luft erwärmt.
WO 2016/133421 A1 beschreibt einen Flaschenwärmer mit einer Kammer, in welcher die Babyflasche liegend rotiert und mittels Mikrowellen erhitzt wird. Ein an einem Ausgang der Kammer angeordneter Infrarotsensor detektiert die sporadisch von der Babyflasche ausgesandten Infrarotstrahlen, um so die Temperatur der Babynahrung zu bestimmen und zu kontrollieren.
DE 40 14 569 A1 offenbart einen Babyflaschenaufsatz zur Temperaturmessung, wobei eine LCD-Anzeige die gemessene Temperatur anzeigt.
WO 2016/160019 A1 offenbart eine Babyflasche mit einem im Boden der Flasche integrierten Heizkörper. Auch WO 2004/054414 A1 beschreibt eine Babyflasche mit einem Heizelement, welches sich jedoch beim Ausfluss der Flasche befindet, so dass die ausfliessende Milch erwärmt wird.
US 2014/0073252 A1 schlägt vor, Temperaturwerte einer Babyflasche an ein Smartphone zu senden.
US 2011/033587 A1 offenbart einen Flaschenwärmer und eine Mischvorrichtung zum Erwärmen und Mischen von Inhalten einer Babyflasche. US 6 417 498 B1 offenbart eine Behältervorrichtung zum Erwärmen von Flüssigkeitsbehältern. WO 2014/190475 A1 offenbart einen Milchwärmer zum Erwärmen oder Erhitzen einer Saugflasche.
Abgepumpte Muttermilch wird üblicherweise bis zum Gebrauch im Kühlschrank aufbewahrt oder eingefroren. Entsprechend lange dauert das Erwärmen auf die gewünschte Temperatur. In der Eile wird die Milch oft überhitzt, was der Qualität der Milch schaden kann.

DARSTELLUNG DER ERFINDUNG

Es ist deshalb eine Aufgabe der Erfindung, eine möglichst effiziente, jedoch gleichzeitig schonende Temperierung der Babynahrung auf eine vordefinierte Temperatur zu ermöglichen.
Diese Aufgabe lösen eine Vorrichtung und ein Verfahren mit den Merkmalen der unabhängigen Patentansprüche 1 bzw. 12.
Die erfindungsgemässe Vorrichtung zur Temperierung von Babynahrung weist ein Gefäss mit einem Innenraum zur Aufnahme eines Behälters für die Babynahrung, eine Temperierungseinheit zur Temperierung des Innenraums und einen ersten Sensor zur Bestimmung der Temperatur im Innenraum auf. Ferner ist eine Sensoreinheit mit einem zweiten Sensor zur Bestimmung der Temperatur der Babynahrung im Behälter vorhanden. Der Innenraum wird vorzugsweise mittels eines darin befindlichen oder eingebrachten Temperierungsfluid erwärmt oder gekühlt. Als Temperierungsfluid eignen sich beispielsweise Wasser und temperierte Luft, wobei Wasser bevorzugt ist.
Die Babynahrung kann fest oder flüssig sein. In bevorzugten Beispielen ist sie abgepumpte Muttermilch oder eine andere Art von Säuglingsmilch. Sie kann beispielsweise auch Tee oder Wasser sein. Die Nahrung kann beispielsweise gefroren oder gekühlt sein oder Zimmertemperatur aufweisen. Die Nahrung wird üblicherweise erwärmt. Je nach Ausführungsform der Vorrichtung kann sie jedoch alternativ oder zusätzlich gekühlt werden, um die gewünschte vordefinierte Temperatur der Babynahrung zu erreichen.
In einfachen Ausführungsformen lässt sich die Vorrichtung bei erhöhter Temperatur der Babynahrung, d.h. nach entsprechender Anzeige des zweiten Sensors, manuell oder automatisch abschalten, wobei der Behälter mit der Babynahrung vorzugsweise aus dem Gefäss entfernt wird oder das Temperierungsfluid aus dem Innenraum entfernt wird. Erfindungsgemäß ist eine Elektronikeinheit vorhanden, welche die Temperierungseinheit steuert. Die Vorrichtung weist die Elektronikeinheit zur Steuerung der Temperierungseinheit nach Massgabe von Messwerten des ersten und des zweiten Sensors auf.

Der erste Sensor bestimmt die Temperatur im Innenraum, vorzugsweise bestimmt er die Temperatur des Temperierungsfluids. In bevorzugteren Ausführungsformen wird der Messwert des zweiten Sensors dazu verwendet, die Temperierungseinheit abzuschalten, sobald die Temperatur der Babynahrung einen vordefinierten Wert erreicht hat.

Erfindungsgemäß werden die Messwerte des ersten und des zweiten Sensors zur Steuerung der Temperierungseinheit verwendet.

Der Begriff "Steuerung" ist breit zu verstehen und umfasst je nach Ausführungsform auch den Begriff "Regelung". Die Verwendung der Messwerte beider Sensoren erfolgt vorzugsweise in Echtzeit und vorzugsweise gleichzeitig. Vorzugsweise wird ein gewichteter Mittelwert eines Messwerts des ersten Sensors und eines Messwerts des zweiten Sensors verwendet. Durch die Verwendung der Messwerte beider Sensoren zur Steuerung der Temperierungseinheit lässt sich die Babynahrung höchst effizient und schonend temperieren, insbesondere erwärmen, oder über längere Zeit innerhalb eines bestimmten Temperaturbandes halten.

Vorzugsweise ist der erste Sensor lagefixiert im Innenraum angeordnet. Er kann in den Innenraum hineinragen. Vorzugsweise ist er geschützt in einem abgetrennten Bereich oder in der Wandung des Gefässes angeordnet.

Die Sensoreinheit mit dem zweiten Sensor kann ebenfalls am Gefäss angeordnet sein und z.B. über einen Schwenkarm in den Behälter einführbar sein. Vorzugsweise ist die Sensoreinheit mit dem zweiten Sensor jedoch ein separates Teil. Vorzugsweise ist der zweite Sensor ein mobiler Sensor, welcher zur Anordnung im Behälter ausgebildet ist.

Vorzugsweise weist die Sensoreinheit mindestens eine Anzeige zur Anzeige einer Erreichung einer vorgegebenen Temperatur auf. Die Anzeige ist beispielsweise eine akustische Anzeige. Beispielsweise kann ein Ton erzeugt werden, sobald die vordefinierte Temperatur der Babynahrung erreicht ist. Die Anzeige ist beispielsweise alternativ oder zusätzlich eine optische Anzeige. In einer Ausführungsform ist ein Display vorhanden, welche die gemessene Temperatur der Babynahrung anzeigt. In einer anderen Ausführungsform ist mindestens eine Leuchte vorhanden, welche das Erreichen bzw. das Noch-Nicht-Erreichen der vordefinierten Temperatur sichtbar macht.

In bevorzugten Ausführungsformen weist die Sensoreinheit den zweiten Sensor sowie einen Sensorkopf und einen daran angeordneten Sensorstab auf, wobei der Sensorstab mit dem zweiten Sensor zur Bestimmung der Temperatur der Babynahrung versehen ist. Eine derartige Ausbildung der Sensoreinheit ermöglicht eine einfache Einführung in Behälter mit Babynahrung, insbesondere in eine Flasche. Ferner kann die Sensoreinheit mit dem Sensorkopf auf einem Behälterhals oder einem Adapterteil aufliegen.

In bevorzugten Ausführungsformen umfasst die Vorrichtung ein Adapterteil mit einer Durchgangsöffnung, mittels welcher die Sensoreinheit in einer in den Behälter mindestens teilweise eingeführten Position befestigbar ist. Die Vorrichtung kann auch ein Set von verschiedenen Adaptern aufweisen, damit die Sensoreinheit in unterschiedlich geformte Behälter befestigt werden kann. Das Adapterteil kann mit dem Gefäss verbunden sein. Vorzugsweise bildet es jedoch wie die Sensoreinheit ein zum Gefäss separates Teil.

Das Adapterteil ist vorzugsweise zur Befestigung auf dem Behälter ausgebildet. Vorzugsweise weist es einen Flansch mit einem Innengewinde auf, um auf ein Aussengewinde eines Behälterhalses aufgeschraubt zu werden.

In bevorzugten Ausführungsformen weist das Adapterteil zwei Befestigungspositionen zur Befestigung der Sensoreinheit im Behälter auf, wobei die Sensoreinheit in Abhängigkeit der zwei Befestigungspositionen unterschiedlich weit in den Behälter hineinragt. Dies lässt sich auf unterschiedliche Weise erzielen. Vorzugsweise weist das Adapterteil mindestens zwei Elemente auf, wobei ein erstes Element ein Distanzkörper ist, welcher je nach Anordnung in Bezug auf ein zweites Element des Adapterteils den Sensorkopf mehr oder weniger vom Befestigungsort des Adapterteils distanziert. Dadurch lässt sich ein die Messung durchführendes Sensorelement wahlweise tief oder weniger tief in den Behälterinnenraum absenken.

Vorzugsweise ist die Sensoreinheit in einer Längsrichtung verschiebbar innerhalb des Adapterteils gehalten. In einer ersten Ausführungsform erfolgt diese Verschiebbarkeit ausschliesslich durch manuellen Druck. In einer anderen Ausführungsform ist der Sensorkopf oder ein anderer oberer Bereich der Sensoreinheit jedoch so schwer ausgebildet, dass die Sensoreinheit selbsttätig entlang des Adapterteils nach unten in den Behälter hineinrutscht, bis entweder sein unteres Ende an einer Oberfläche ansteht oder bis der Sensorkopf bzw. der obere Bereich auf dem Adapterteil aufliegt. Dies ist insbesondere dann von Vorteil, wenn die Temperatur eines gefrorenen Behälterinhalts gemessen werden soll. Zum einen kann der zweite Sensor am Anfang der Messung auf der gefrorenen Oberfläche anstehen und so die Temperatur an der Oberfläche bestimmen. Zum anderen gleitet der zweite Sensor, sobald die Babynahrung schmilzt, gemeinsam mit der noch nicht aufgetauten Oberfläche der Babynahrung nach unten, bis der zweite Sensor dann in die aufgetaute Babynahrung eintauchen kann. Vorteilhaft ist ferner, dass der zweite Sensor die noch nicht aufgetaute Babynahrung nach unten in die bereits aufgewärmte Flüssigkeit drückt, was ein schnelleres Auftauen fördert.

In einer bevorzugten Ausführungsform wird das vorzeitige Anstehen des zweiten Sensors detektiert. Der gefrorene Zustand wird erkannt und die Vorrichtung verwendet automatisch ein schonendes, aber effizientes Auftauprogramm. Alternativ kann der gefrorene Zustand auch einfach durch die gemessene Temperatur erkannt und in der Vorrichtung weiterverwendet werden.

Die Sensoreinheit kann eine eigene Energiequelle aufweisen. Sie kann über ein Kabel mit einer Energiequelle, z.B. einer externen Batterie, verbunden sein. Diese ist vorzugsweise in einem Gehäuse oder Sockel des Gefässes angeordnet. Vorzugsweise weist die Sensoreinheit einen integrierten Energiespeicher, z.B. eine Batterie, auf.

In einer anderen Ausführungsform ist im Gefäss eine Energiequelle für die Sensoreinheit vorhanden, wobei die Energie kabellos mittels Induktion in die Sensoreinheit übertragen wird. Diese Anordnung hat den Vorteil, dass keine Batterien benötigt werden. Zudem verhindert diese Art der Energieübertragung einen Gebrauch der Sensoreinheit ohne zugehöriges Gefäss.

Die Messwerte lassen sich über Kabel oder drahtlos an die Elektronikeinheit übermitteln. Vorzugsweise weist mindestens die Sensoreinheit derartige drahtlose Übermittlungselemente auf.

In einer bevorzugten Ausführungsform weist die Vorrichtung Sendemittel auf, um ein Erreichen einer vorgegebenen Temperatur an ein externes intelligentes Mobilgerät (mobile smart device), wie z.B. einem smart phone, zu übertragen. Je nach Ausführungsform sind die Sendemittel im zweiten Sensor und/oder in der Elektronikeinheit vorhanden.

Im erfindungsgemässen Verfahren zur Temperierung von Babynahrung mit der oben beschriebenen Vorrichtung wird mit dem ersten Sensor die Temperatur im Innenraum und mit dem zweiten Sensor die Temperatur der Babynahrung im Behälter bestimmt.

Erfindungsgemäss werden die Messwerte beider Sensoren von der Elektronikeinheit zur Steuerung der Temperierungseinheit verwendet. Es werden vorzugsweise gewichtete Mittelwerte benützt.

Weitere Ausführungsformen und Varianten sind in den abhängigen Ansprüchen angegeben.

KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:

Figur 1    einen Längsschnitt durch eine schematische Darstellung einer erfindungsgemässen Vorrichtung mit kleinem Behälter;

Figur 2    den Längsschnitt gemäss Figur 1 mit grossem Behälter;

Figur 3    eine schematische, perspektivische Darstellung einer erfindungsgemässen Sensoreinheit;

Figur 4    einen Längsschnitt durch die Sensoreinheit gemäss Figur 3;

Figur 5    einen kleinen Behälter mit gefrorener Babynahrung mit einem Adapterteil und der Sensoreinheit;

Figur 6    einen grossen Behälter mit gefrorener Babynahrung mit einem Adapterteil und der Sensoreinheit;

Figur 7    einen kleinen Behälter mit flüssiger Babynahrung mit einem Adapterteil und der Sensoreinheit;

Figur 8    einen grossen Behälter mit flüssiger Babynahrung mit einem Adapterteil und der Sensoreinheit und

Figur 9    einen Längsschnitt durch eine schematische Darstellung einer erfindungsgemässen Vorrichtung gemäss einer zweiten Ausführungsform.

BESCHREIBUNG BEVORZUGTER AUSFÜHRUNGSFORMEN

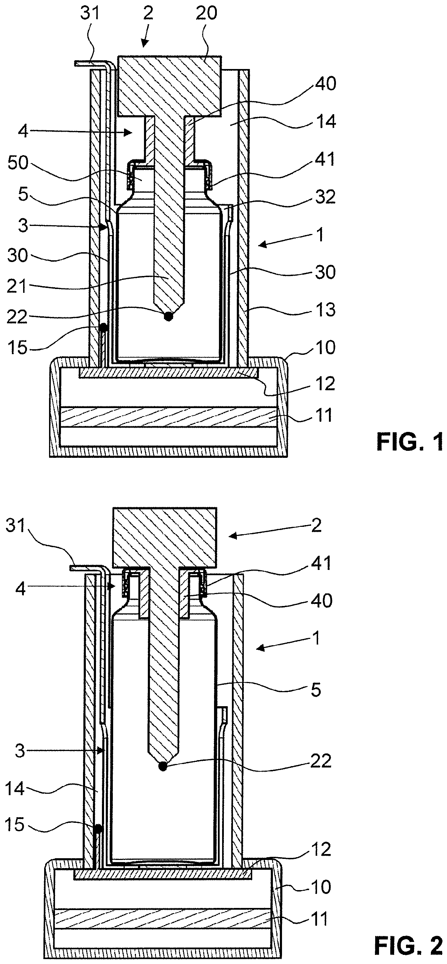

In Figur 1 ist ein erstes Ausführungsbeispiel der erfindungsgemässen Vorrichtung dargestellt. Sie weist ein Gefäss 1 mit einer Elektronikeinheit 11, einer Temperierungseinheit 12 und einem ersten Sensor 15 sowie einer mobilen Sensoreinheit 2 mit einem zweiten Sensor 22 und einen Hebekorb 3 auf. Als erste und zweite Sensoren 15, 22 eignen sich insbesondere Sensoren der Typen NTC, lineare PTC, Platin-R, Halbleiter und IC's.

Das Gefäss 1 weist vorzugsweise ein Basisteil 10, auch Sockel genannt, sowie einen sich über dieses Basisteil 10 erhebenden Behälteraufnahmekörper 13 auf. Der Behälteraufnahmekörper 13 ist vorzugsweise zylinderförmig ausgebildet und weist einen nach oben offenen Innenraum 14 zur Aufnahme eines Behälters 5 für Babynahrung auf.

Der Behälter 5 ist in diesem Beispiel eine Säuglingsflasche mit einem Flaschenkörper und einem Flaschenhals 50, auf welchen für die Nahrungsabgabe der Sauger aufgesetzt wird. Der Behälter 5 kann direkt in den Innenraum 14 gestellt werden. Vorzugsweise wird hierfür jedoch der Hebekorb 3 verwendet. Er weist ein Aufnahmeteil 30 zur Halterung des Behälters 5 und einen Griff 31 zur vereinfachten Bedienung des Korbs auf.

Die Elektronikeinheit 11 sowie die Temperierungseinheit 12 sind vorzugsweise im Basisteil 10 angeordnet. Die Temperierungseinheit 12 ist eine im Stand der Technik bekannte Einheit zur Erwärmung oder je nach Ausführungsform zur Kühlung des Innenraums 14 bzw. eines sich darin befindlichen Fluids. Vorzugsweise ist sie durch eine elektrische Heizschlange oder eine elektrische Heizplatte gebildet. Im Basisteil ist eine entsprechende Energiequelle, z.B. eine Batterie, oder ein elektrischer Anschluss für ein Stromnetz vorhanden.

Der erste Sensor 15 ist im Innenraum 14 angeordnet. Er ist drahtlos oder über eine Leitung mit der Elektronikeinheit 11 verbunden und übermittelt Messdaten an diese Elektronikeinheit 11. Die Elektronikeinheit 11 ist mit der Temperierungseinheit 12 verbunden, um die Temperierungsleistung, insbesondere die Heizleistung, nach Massgabe der gemessenen Temperaturwerte des ersten Sensors 15 und des zweiten Sensors 22 zu steuern.

Die Sensoreinheit 2 weist den zweiten Sensor 22 sowie einen Sensorkopf 20 mit einem ersten Durchmesser und einen Sensorstab 21 mit einem zweiten Durchmesser auf. Der erste Durchmesser ist vorzugsweise grösser als der zweite Durchmesser.

Am sensorkopffernen freien Ende des Sensorstabes 21 ist der zweite Sensor 22 angeordnet. Er ist in die Babynahrung eingetaucht oder kontaktiert eine Oberfläche der Babynahrung und misst so deren Temperatur. Die Messwerte werden wiederum entweder drathlos oder über Kabel zur Elektronikeinheit übermittelt.

Ein Adapterteil 4 hält die Sensoreinheit 2 in einer gewünschten Position. Das Adapterteil 4 weist eine Durchgangsöffnung auf, welche vom Sensorstab 21 durchsetzt ist. Der Sensorkopf 20 liegt auf dem Adapterteil 4 auf und wird so von ihm gehalten. Dadurch ragt der zweite Sensor 22 in eine zu den Wänden des Behälters beabstandete Zone und kann die Temperatur der Babynahrung optimal bestimmen. Das Adapterteil 4 ist auf dem Behälterhals 50 befestigt. Vorzugsweise ist es aufgeschraubt oder aufgesteckt.

Das Adapterteil 4 erlaubt vorzugsweise die Halterung des zweiten Sensors 22 in mindestens zwei stabilen Positionen. Dies ist bei Verwendung unterschiedlicher Behältergrössen vorteilhaft. Vorzugsweise ist das Adapterteil 4 mehrteilig ausgebildet. In diesem Beispiel ist es zweiteilig ausgebildet. Es weist einen Befestigungskörper 41, vorzugsweise einen Gewindering, sowie einen Distanzkörper 40 auf. Der Distanzkörper 40 besteht im Wesentlichen aus einem Hohlzylinder und einem stirnseitigen, nach aussen ragenden Flansch. Das Adapterteil 4 ist vorzugsweise aus Kunststoff gefertigt.

Je nachdem, wie der Distanzkörper 40 mit dem Gewindering 41 verbunden wird, ändert sich die Form des Adapterteils 4. In Figur 1 ist der Behälter 5 eine relativ kleine Babyflasche. Der Distanzkörper 40 ist mit nach unten zeigendem Flansch orientiert. Der Gewindering klemmt den Flansch zwischen sich und dem Behälterhals 50 ein. Der Hohlzylinder des Distanzkörpers 40 ragt nach oben und verlängert so den Behälter 5. Der Sensorkopf 20 liegt auf dem Distanzkörper 40 auf und das untere freie Ende des Sensorstabes 21 endet beabstandet zu Wänden des Behälters 5 in dessen Innenraum 51.

In Figur 2 ist ein grosser Behälter dargestellt. Das Adapterteil 4 ist nun anders zusammengesetzt. Der Flansch des Distanzkörpers 40 zeigt nach oben, wobei er wiederum zwischen Gewindering 41 und oberer Stirnfläche des Behälterhalses 5 eingeklemmt ist. Der Hohlzylinder des Distanzkörpers 40 zeigt nun jedoch nach unten. Der Sensorkopf 20 liegt somit auf dem Gewindering auf. Auch hier endet das freie Ende des Sensorstabes 21 beabstandet zu den Wänden des Behälters 5.

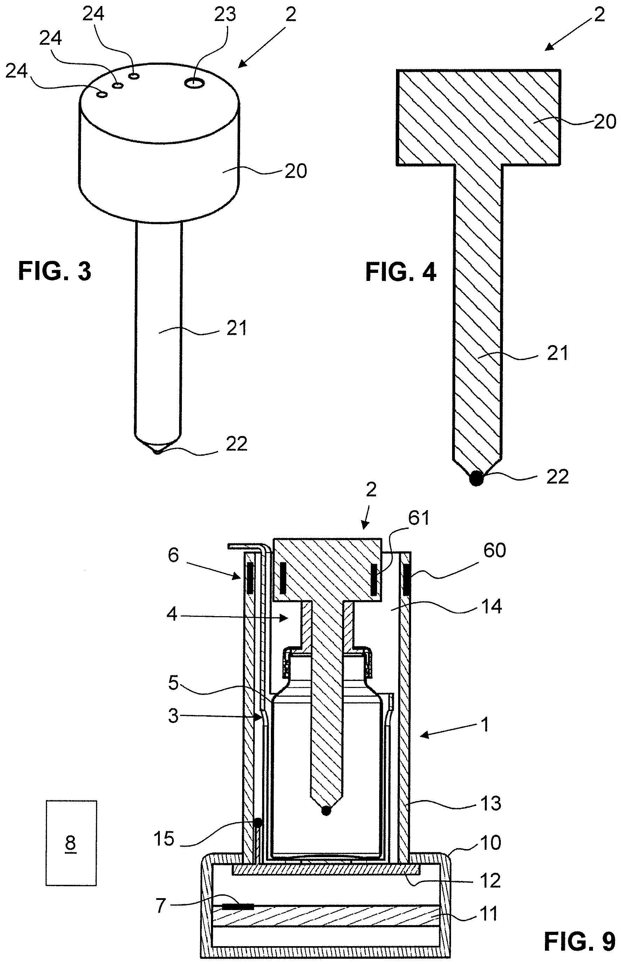

Die Figuren 3 und 4 zeigen die mobile Sensoreinheit 2. In Figur 3 ist erkennbar, dass die Sensoreinheit, vorzugsweise der Sensorkopf 20 mit mindestens einer Anzeige versehen sein kann. In diesem Beispiel ist ein akustischer Signalgeber 23 vorhanden, welcher die Erreichung einer vorgegebenen Temperatur der Babynahrung anzeigt und/oder Störungen meldet. Die Bezugszeichen 24 beziehen sich auf optische Anzeigen. Diese können beispielsweise verschiedenfarbige LED sein, welche den Betriebszustand, den Fortschritt der Erwärmung und das Erreichen der vorgegebenen Temperatur der Babynahrung anzeigen. Selbstverständlich ist es auch möglich, dass die Sensoreinheit 2 ein Display mit Temperaturangaben und/oder Diagrammen zum Erwärmungsfortschritt aufweist. Gleiches gilt im Falle einer Kühlung.

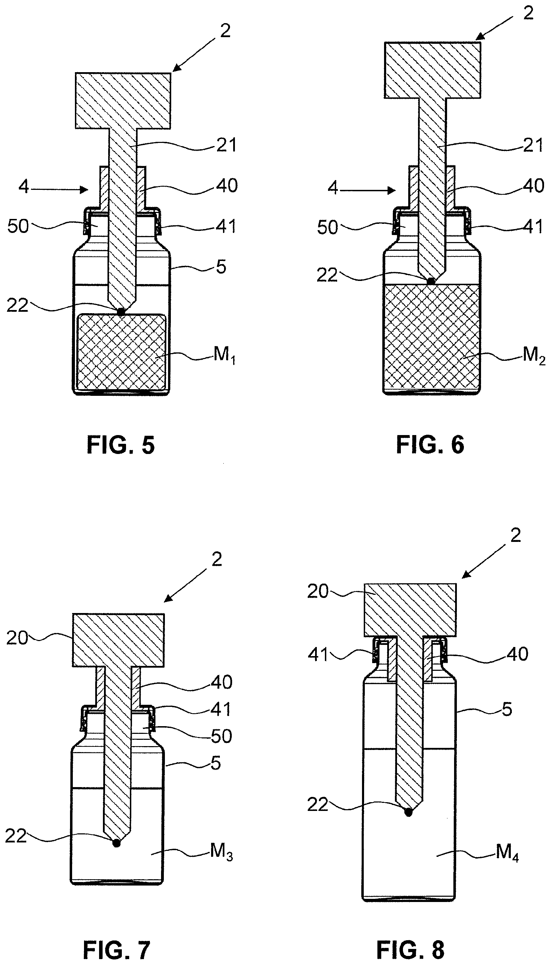

In den Figuren 5 bis 8 sind verschiedene Arten von Babynahrung dargestellt. Die Figuren 5 und 6 zeigen die Position des in den Behälter 5 eingeführten zweiten Sensors 22 im Falle einer gefrorenen Babynahrung $M_1$, $M_2$. In diesem Fall liegt der Sensorkopf 20 nicht auf dem Distanzkörper 40 bzw. dem Gewindering 41 auf, da das freie Ende des Sensorstabes 21 bereits vorher auf der gefrorenen Oberfläche ansteht. Während des Auftauens der Babynahrung gleitet der Sensorstab 21 entlang des Adapters 4 nach unten, bis der Sensorkopf 20 wieder ansteht und das freie Ende des Sensorstabs 21 von der Babynahrung umgeben ist. Diese Situation ist in den Figuren 7 und 8 erkennbar.

In Figur 9 ist eine Variante der Ausführungsform gemäss Figur 1 dargestellt. Anstelle einer in der Sensoreinheit 2 integrierten Energiequelle bzw. anstelle eines Stromkabels zwischen der Sensoreinheit 2 und Gefäss 1 ist ein Induktionsmodul 6 vorhanden. Das Gefäss 1 ist mit einer entsprechenden ersten Induktionsspule 60 und die Sensoreinheit 2 mit einer zweiten Induktionsspule 61 versehen. Befindet sich die Sensoreinheit 2 im Gefäss 1 und ist das Gefäss 1 aktiviert, so wird die Sensoreinheit 2 mit elektrischer Energie gespeist und der zweite Sensor 22 kann die notwendigen Messungen durchführen. Zudem ist im Sockel 10 ein Sendemittel 7 zur Übermittlung von Temperaturangaben sowie ein Smart Device 8 zum Empfang derselben dargestellt. Diese können auch ohne Induktionsmodul 6 verwendet werden. Des Weiteren kann das Sendemittel 7 zusätzlich als Empfangsmittel ausgebildet sein, um beispielsweise Informationen und Parameter vom Smart Device 8 oder einer anderen Informationsquelle zu erhalten. Es lassen sich beispielsweise Angaben zur gewünschten Temperatur oder zum verwendeten Behälter übermitteln.

Die erfindungsgemässe Vorrichtung wird wie folgt verwendet. In den Innenraum 14 des Behälteraufnahmekörpers 13 wird ein erwärmbares Fluid, vorzugsweise Wasser, eingefüllt. Alternativ kann das Gefäss beispielsweise auch ausgebildet sein, um den Innenraum mittels temperierter Luft zu erwärmen bzw. zu kühlen. Vorzugsweise ist das Füllvolumen des Innenraums wie auch das Volumen der Babynahrung bekannt und diese Daten können in die Elektronikeinheit eingegeben oder von dieser direkt erkannt werden, beispielsweise durch eine integrierte Waage. Vorzugsweise entspricht das Volumen des eingefüllten Temperierungsfluids circa dem Volumen der Babynahrung.

Wird die Vorrichtung nun eingeschaltet, so messen beide Sensoren 15, 22 die entsprechenden Temperaturen, wobei die Temperatur der Babynahrung im folgenden $T_M$ und die Temperatur des Temperierungsfluids $T_W$ genannt wird. Die Elektronikeinheit berechnet, vorzugsweise mittels eines darin enthaltenen Controllers, einen entsprechend dem Volumenverhältnis der zwei Messmedien gewichteten Temperatur-Mittelwert

$$T_{Regler} = (x * T_M + y * T_W) / 2.$$

Mittels dieses Mittelwerts $T_{Regler}$ wird nun die Temperierungseinheit geregelt und die Heiz- oder gegebenenfalls die Kühlleistung entsprechen eingestellt.

Die erfindungsgemässe Vorrichtung sowie das erfindungsgemässe Verfahren erlauben eine schonende und trotzdem effiziente Temperierung von Babynahrung.

BEZUGSZEICHENLISTE

| | | | |
|---|---|---|---|
| 1 | Gefäss | 40 | Distanzkörper |
| 10 | Basisteil | 41 | Befestigungskörper |
| 11 | Elektronikeinheit | | |
| 12 | Temperierungseinheit | 5 | Behälter |
| 13 | Behälteraufnahmekörper | 50 | Behälterhals |
| 14 | Innenraum | 51 | Innenraum |
| 15 | erster Sensor | | |
| | | 6 | Induktionsmodul |
| 2 | Sensoreinheit | 60 | erste Induktionsspule |
| 20 | Sensorkopf | 61 | zweite Induktionsspule |
| 21 | Sensorstab | | |
| 22 | zweiter Sensor | 7 | Sendemittel |
| 23 | akustischer Signalgeber | | |
| 24 | optischer Signalgeber | 8 | Smart Device |
| 3 | Hebekorb | $M_1$ | kleine gefrorene Milchmenge |
| 30 | Aufnahmeteil | $M_2$ | grosse gefrorene Milchmenge |
| 31 | Griff | $M_3$ | kleine flüssige Milchmenge |
| | | $M_4$ | grosse flüssige Milchmenge |
| 4 | Adapterteil | | |

**Patentansprüche**

1. Vorrichtung zur Temperierung von Babynahrung,

   wobei die Vorrichtung ein Gefäss (1) mit einem Innenraum zur Aufnahme eines Behälters (5) für die Babynahrung, eine Temperierungseinheit (12) zur Temperierung des Innenraums (14) und einen ersten Sensor (15) zur Bestimmung der Temperatur im Innenraum (14) aufweist,
   wobei die Vorrichtung eine Sensoreinheit (2) mit einem zweiten Sensor (22) zur Bestimmung der Temperatur der Babynahrung im Behälter (5) aufweist,
   **dadurch gekennzeichnet, dass**
   die Vorrichtung eine Elektronikeinheit (11) aufweist zur Steuerung der Temperierungseinheit (12) nach Massgabe von Messwerten des ersten und des zweiten Sensors (15, 22),

EP 3 554 321 B1

wobei die Elektronikeinheit (11) Messwerte des ersten und des zweiten Sensors (15, 22) zur Steuerung der Temperierungseinheit (12) verwendet.

2.  Vorrichtung nach Anspruch 1, wobei der erste Sensor (15) lagefixiert im Innenraum (14) angeordnet ist.

3.  Vorrichtung nach einem der voranstehenden Ansprüche, wobei der zweite Sensor (22) ein mobiler Sensor ist und zur Anordnung im Behälter (5) ausgebildet ist.

4.  Vorrichtung nach einem der voranstehenden Ansprüche, wobei die Sensoreinheit (2) mindestens eine Anzeige (23, 24) zur Anzeige einer Erreichung einer vorgegebenen Temperatur aufweist.

5.  Vorrichtung nach Anspruch 1, wobei die Sensoreinheit (2) einen Sensorkopf (20) und einen daran angeordneten Sensorstab (21) aufweist, wobei der Sensorstab (21) mit dem zweiten Sensor (22) zur Bestimmung der Temperatur der Babynahrung versehen ist.

6.  Vorrichtung nach einem der voranstehenden Ansprüche, wobei die Vorrichtung ein Adapterteil (4) mit einer Durchgangsöffnung aufweist, mittels welchem die Sensoreinheit (2) in einem in den Behälter (5) mindestens teilweise eingeführten Zustand befestigbar ist.

7.  Vorrichtung nach Anspruch 6, wobei das Adapterteil (4) zur Befestigung auf dem Behälter (5) ausgebildet ist.

8.  Vorrichtung nach Anspruch 7, wobei das Adapterteil (4) zwei Befestigungspositionen zur Befestigung der Sensoreinheit (2) im Behälter (5) aufweist, wobei die Sensoreinheit (2) in Abhängigkeit der zwei Befestigungspositionen unterschiedlich weit in den Behälter (5) hineinragt.

9.  Vorrichtung nach einem der Ansprüche 5 bis 8, wobei die Sensoreinheit (2) in einer Längsrichtung verschiebbar innerhalb des Adapterteils (4) gehalten ist.

10. Vorrichtung nach einem der voranstehenden Ansprüche, wobei das Gefäss (1) eine Energiequelle (6) für die Sensoreinheit (2) aufweist.

11. Vorrichtung nach einem der voranstehenden Ansprüche, wobei die Vorrichtung Sendemittel (7) aufweist, um ein Erreichen einer vorgegebenen Temperatur an ein externes intelligentes Mobilgerät (8) zu übertragen

12. Verfahren zur Temperierung von Babynahrung mit einer Vorrichtung, welche ein Gefäss (1) mit einem Innenraum (14) zur Aufnahme eines Behälters (5) für die Babynahrung und eine Temperierungseinheit (12) zur Temperierung des Innenraums (14) aufweist,

wobei mit einem ersten Sensor (15) die Temperatur im Innenraum (14) bestimmt wird und mit einem zweiten Sensor (22) die Temperatur der Babynahrung im Behälter (5) bestimmt wird,
wobei die Vorrichtung eine Elektronikeinheit (11) zur Steuerung der Temperierungseinheit (12) nach Massgabe von Messwerten des ersten und des zweiten Sensors (15, 22) aufweist,
und wobei die Elektronikeinheit (11) Messwerte des ersten und des zweiten Sensors (15, 22) zur Steuerung der Temperierungseinheit (12) verwendet.

**Claims**

1.  Device for bringing baby food to a certain temperature, wherein the device comprises a vessel (1) having an interior for accommodating a container (5) for the baby food, a unit for obtaining a temperature (12) for bringing the interior (14) to a certain temperature, and a first sensor (15) for determining the temperature in the interior (14), wherein the device comprises a sensor unit (2) having a second sensor (22) for determining the temperature of the baby food in the container (5), **characterized in that** the device comprises an electronic unit (11) for controlling the unit for obtaining a temperature (12) in accordance with measured values from the first and the second sensor (15, 22), wherein the electronic unit (11) utilizes measured values from the first and the second sensor (15, 22) for controlling the unit for obtaining a temperature (12).

2.  Device according to one of Claim 1, wherein the first sensor (15) is fixed in position in the interior (14).

3. Device according to one of the preceding Claims, wherein the second sensor (22) is a mobile sensor and is designed for arrangement in the container (5).

4. Device according to one of the preceding Claims, wherein the sensor unit (2) comprises at least one display (23, 24) for displaying an attainment of a predefined temperature.

5. Device according to one of the preceding Claims, wherein the sensor unit (2) comprises a sensor head (20) and a sensor rod (21) situated thereon, wherein the sensor rod (21) is provided with the second sensor (22) for determining the temperature of the baby food.

6. Device according to one of the preceding Claims, wherein the device comprises an adapter part (4) having a through-hole, by means of which the sensor unit (2) can be fastened in a state at least partially inserted into the container (5).

7. Device according to Claim 6, wherein the adapter part (4) is designed to be fastened on the container (5).

8. Device according to Claim 7, wherein the adapter part (4) has two fastening positions for fastening the sensor unit (2) in the container (5), wherein the sensor unit (2) extends into the container (5) to different extents depending on the two fastening positions.

9. Device according to one of the preceding Claims, wherein the sensor unit (2) is held so as to be displaceable in a longitudinal direction within the adapter part (4).

10. Device according to one of the preceding Claims, wherein the vessel (1) comprises an energy source (6) for the sensor unit (2).

11. Device according to one of the preceding Claims, wherein the device comprises transmitting means (7) in order to transmit an attainment of a predefined temperature to an external intelligent mobile device (8).

12. Method for bringing baby food to a certain temperature, comprising a device which comprises a vessel (1) having an interior (14) for accommodating a container (5) for the baby food, and a unit for obtaining a temperature (12) for bringing the interior (14) to a certain temperature, wherein the temperature in the interior (14) is determined using a first sensor (15), and the temperature of the baby food in the container (5) is determined using a second sensor (22), wherein the device comprises an electronic unit (11) for controlling the unit for obtaining a temperature (12) in accordance with measured values from the first and the second sensor (15, 22), wherein the electronic unit (11) utilizes measured values from the first and the second sensor (15, 22) for controlling the unit for obtaining a temperature (12)..

**Revendications**

1. Dispositif pour réguler la température d'aliments pour bébés

   le dispositif présentant un récipient (1) avec un espace intérieur pour recevoir un récipient (5) pour l'aliment pour bébé, une unité de thermorégulation (12) pour thermoréguler l'espace intérieur (14) et un premier capteur (15) pour déterminer la température dans l'espace intérieur (14),
   le dispositif comprenant une unité de capteur (2) avec un deuxième capteur (22) pour déterminer la température de l'aliment pour bébé dans le récipient (5),
   **caractérisé en ce que**
   le dispositif présente une unité électronique (11) pour la commande de l'unité de thermorégulation (12) en fonction des valeurs de mesure du premier et du deuxième capteur (15, 22),
   l'unité électronique (11) utilisant des valeurs de mesure du premier et du deuxième capteur (15, 22) pour commander l'unité de thermorégulation (12).

2. Dispositif selon la revendication 1, le premier capteur (15) étant disposé en position fixe dans l'espace intérieur (14).

3. Dispositif selon l'une des revendications précédentes, le deuxième capteur (22) étant un capteur mobile et étant conçu pour être placé dans le récipient (5).

**4.** Dispositif selon l'une des revendications précédentes, l'unité de capteur (2) comportant au moins un indicateur (23, 24) pour indiquer qu'une température prédéterminée a été atteinte.

**5.** Dispositif selon la revendication 1, l'unité de capteur (2) comprenant une tête de capteur (20) et une tige de capteur (21) disposée sur celle-ci, la tige de capteur (21) étant munie du deuxième capteur (22) pour déterminer la température de l'aliment pour bébé.

**6.** Dispositif selon l'une quelconque des revendications précédentes, le dispositif comprenant une pièce d'adaptation (4) avec une ouverture traversante, au moyen de laquelle l'unité de capteur ( 2) peut être fixée dans un état au moins partiellement inséré dans le récipient (5).

**7.** Dispositif selon la revendication 6, la pièce d'adaptation (4) étant conçue pour être fixée sur le récipient (5).

**8.** Dispositif selon la revendication 7, la pièce d'adaptation (4) présentant deux positions de fixation pour fixer l'unité de capteur (2) dans le récipient (5), l'unité de capteur (2) pénétrant dans le récipient (5) sur une distance différente en fonction des deux positions de fixation.

**9.** Dispositif selon l'une quelconque des revendications 5 à 8, l'unité de détection (2) étant maintenue à l'intérieur de la pièce d'adaptation (4) de manière à pouvoir être déplacée dans une direction longitudinale.

**10.** Dispositif selon l'une des revendications précédentes, le récipient (1) comprenant une source d'énergie (6) pour l'unité de capteur (2).

**11.** Dispositif selon l'une quelconque des revendications précédentes, le dispositif comprenant des moyens d'émission (7) pour transmettre à un dispositif mobile intelligent externe (8) une atteinte de température prédéterminée.

**12.** Procédé pour réguler la température d'aliments pour bébés avec un dispositif qui présente un récipient (1) ayant un espace intérieur (14) pour recevoir un récipient (5) pour les aliments pour bébés et une unité de thermorégulation (12) pour réguler la température de l'espace intérieur (14),

la température dans l'espace intérieur (14) étant déterminée à l'aide d'un premier capteur (15) et la température de l'aliment pour bébé dans le récipient (5) étant déterminée à l'aide d'un deuxième capteur(22), le dispositif présentant une unité électronique (11) pour la commande de l'unité de thermorégulation (12) en fonction des valeurs de mesure du premier et du deuxième capteur (15, 22), et l'unité électronique (11) utilisant des valeurs de mesure du premier et du deuxième capteur (15, 22) pour commander l'unité de thermorégulation (12).

**FIG. 1**

**FIG. 2**

FIG. 3

FIG. 4

FIG. 9

**FIG. 5**

**FIG. 6**

**FIG. 7**

**FIG. 8**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2756031 A
- US 20080199164 A1
- US 20090208193 A1
- WO 2016133421 A1
- DE 4014569 A1
- WO 2016160019 A1
- WO 2004054414 A1
- US 20140073252 A1
- US 2011033587 A1
- US 6417498 B1
- WO 2014190475 A1